# EUROPEAN PATENT APPLICATION

(11) **EP 1 318 490 A2**
(43) Date of publication of application: **11.06.2003**
(21) Application number: 02258365.2
(22) Date of filing: 04.12.2002
(51) Int. Cl.: G08C 23/00

(54) **Manufacturing system incorporating telemetry and/or remote control**

(30) Priority: 05.12.2001 GB 0129164; 21.01.2002 GB 0214447
(71) Applicant: QuantumBeam Limited, Ickleton Cambridgeshire CB10 1SX (GB)
(72) Inventor: Green, Alan Edward, Ickleton, Cambridgeshire CB10 1SX (GB); Morrison, Euan, Ickleton, Cambridgeshire CB10 1SX (GB); Parkes, Andrew Mark, Ickleton, Cambridgeshire CB10 1SX (GB); Vasilopoulos, Nicolas, Ickleton, Cambridgeshire CB10 1SX (GB); Ke, Maolong, Ickleton, Cambridgeshire CB10 1SX (GB); White, Andrew, Ickleton, Cambridgeshire CB10 1SX (GB)
(74) Representative: Beresford, Keith Denis Lewis

(57) **Abstract**

There is described a manufacturing system comprising a production system operable to process starting materials to output a product. In an embodiment, the manufacturing system includes a sensor which is operable to generate a data signal representative of a parameter of the production system, the sensor having associated therewith a signalling device comprising a retro-reflecting modulator which receives an incoming light beam from a good signalling device associated with a system manager, modulates the incoming light beam in accordance with the data signal, and retro-reflects the modulated light beam conveying the data signal back to the second signalling device. In another embodiment, the manufacturing system includes an actuator which is operable to vary a parameter of the production system in accordance with a control signal from the system manager, the system manager having associated therewith a first signalling device having a retro-reflecting modulator which receives a light beam from a second signalling device associated with the actuator, modulates the received light beam in accordance with the control signal, and retro-reflects the modulated light beam back to the second signalling device.

## Description

This invention relates to a manufacturing system in which data from a sensor is sent to a remote system manager and/or a system manager sends control signals to a remote actuator.

The use of a system manager to control a remote process device, or to analyse data from the remote process device, is becoming more prevalent. For example, a milling machine can be remotely controlled to mill a solid material to a shape which is defined by a user via a remote computer terminal. The computer terminal sends control signals to the milling machine over a communication link. In this way, the requirement for a dedicated computer provided at the milling machine is removed. Alternatively, data from one or more sensors, for example temperature sensors, positioned throughout an industrial environment can be sent to a common processing device for analysis.

Typically, a remote process device is connected to the system manager, or a network socket for a network connected to the system manager, using a cable. A problem which arises from using a cable is that when the process device is moved to a new position, it is generally necessary first to unplug the cable, and then to plug the cable back in again. This inevitably results in wear and tear on the cable and the sockets to which the cable is connected. Further, the length of the cable limits the positions to which the process device can be moved.

It is also known to employ radio frequency (RF) links in order to convey the data between a system manager, or an RF transceiver connected to a network to which the system manager is also connected, and a remote process device. However, the RF portion of the electromagnetic spectrum is heavily regulated in most countries, and such RF links can interfere with other electronic circuitry present in the industrial environment. Further, in some hazardous environments containing explosive gases, the level of shielding required to prevent any possibility of a spark can be problematic.

According to an aspect of the invention, there is provided a manufacturing system in which signals are transferred between a system manager and one or more process devices using free-space optical communication.

Using free-space optical communication has the advantage that the optical portion of the electromagnetic spectrum is comparatively free from regulation. Further, optical signals do not interfere with electronic circuits to the extent of RF signals.

Exemplary embodiments of the invention will now be described with reference to the accompanying drawings in which:
Figure 1 is a schematic diagram showing components of a manufacturing system incorporating a point-to-multipoint signalling system for distributing data between a control centre and a plurality of process devices;
Figure 2 is a schematic diagram of a remote terminal which forms part of the manufacturing system shown in Figure 1;
Figure 3 is a plot illustrating the way that the power of a laser beam emitted by the remote terminal shown in Figure 2 is varied to achieve a small signal modulation for transmitting uplink data from the remote terminal to a process management unit forming part of the communication system shown in Figure 1;
Figure 4 is an eye diagram schematically illustrating the effect of the small-signal modulation on the detection by the remote terminal of downlink data transmitted from the control centre to the remote terminal;
Figure 5 is a schematic diagram of a microhub forming part of the control centre of the manufacturing system illustrated in Figure 1;
Figure 6 is a signal diagram which schematically illustrates the way in which the light incident on a modulator shown in Figure 5 is modulated in dependence upon the bias voltage applied to the electrodes thereof;
Figure 7 is a schematic perspective view of the modulator which forms part of the microhub illustrated in Figure 5;
Figure 8A is a plan view showing the layout of a first electrode forming part of the modulator shown in Figure 7;
Figure 8B is a plan view showing the layout of a second electrode forming part of the modulator shown in Figure 7;
Figure 8C schematically shows a first sectional view of the modulator illustrated in Figure 7;
Figure 8D schematically shows a second sectional view of the modulator illustrated in Figure 7;
Figure 9 is a schematic block diagram showing in more detail the components of a modulator drive circuit which forms part of the microhub illustrated in Figure 5;
Figure 10 is a schematic block diagram showing in more detail a detection circuit which forms part of the microhub illustrated in Figure 5;
Figure 11 is a circuit diagram showing in more detail a DC cancellation unit and an amplifier which form part of the detection circuit shown in Figure 10; and
Figure 12 schematically shows a distribution hub and a plurality of remote terminals for an alternative manufacturing system to the manufacturing system illustrated in Figure 1.

### FIRST EMBODIMENT

### System Overview

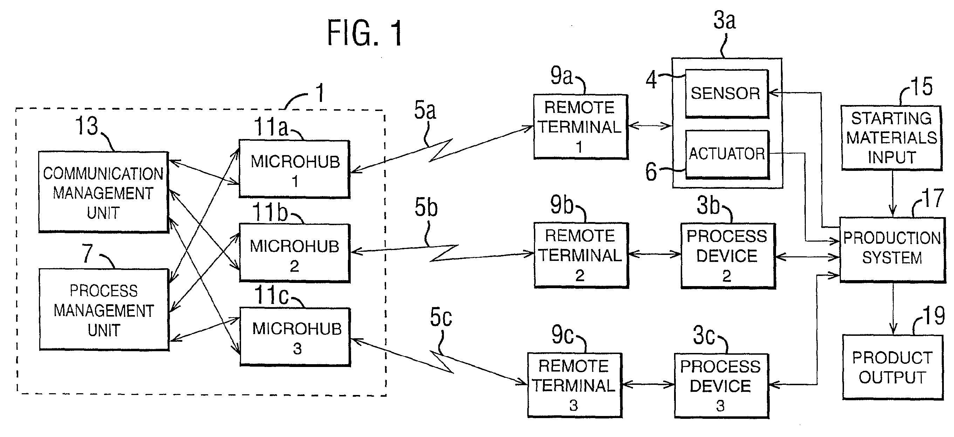

Figure 1 schematically illustrates the main components of an industrial system for manufacturing a product. Starting materials are input, via a starting materials input 15, to a production system 17 which processes the starting materials to produce a product at a product output 19. In this embodiment, a point-to-multipoint signalling system transmits data between a control centre 1 and a plurality of process devices 3a to 3c. As shown for process device 3a, each process device includes a sensor 4, which senses a parameter of the production system, and an actuator 6, which adjusts a parameter of the production system.

The point-to-multipoint signalling system utilises free-space optical links 5a to 5c to transmit data between a process management unit 7, which has overall control of the manufacturing system, and a plurality of remote terminals 9a to 9c which are each connected to a respective process device 3. As shown in Figure 1, the control centre 1 has a plurality of microhubs 11a to 11c with each microhub 11 communicating with a respective one of the remote terminals 9 via a respective optical link 5.

For illustrative purposes, three process devices 3, three remote terminals 9 and three microhubs 11 are shown in Figure 1. However, the number of process devices 3, and correspondingly the number of remote terminals 9 and microhubs 11, is variable so that more or fewer process devices 3 can communicate with the control center 1 via the point-to-multipoint signalling system.

Each remote terminal 9 emits a low divergence free-space light beam, which is modulated in accordance with uplink data to be conveyed to the control centre 1, and directs the emitted light beam at the corresponding microhub 11. In this embodiment, the uplink data corresponds to a measurement by the sensor 4 of the corresponding process device. Each microhub 11 has a detector (not shown in Figure 1) for detecting part of the optical beam from the corresponding remote terminal 9 and recovering the uplink data, and a retro-reflecting modulator (not shown in Figure 1) which modulates and retro-reflects part of the light beam from the corresponding user terminal 9 to convey downlink data from the control centre 1 to the process device 3. In this embodiment, the downlink data corresponds to a control signal for the actuator 6 of the corresponding process device 3.

The process management unit 7 receives downlink data from all of the process devices 3 and processes the downlink data to monitor the operation of the manufacturing system. The process management unit 7 also generates uplink data for the process devices 3 to either maintain the manufacturing system in a desired state of operation or to modify the state of operation of the manufacturing system. The control centre 1 also includes a communication management unit 13 which is connected to each of the microhubs 11 and monitors the operation of the free-space optical links 5 between the microhubs 11 and the remote terminals 9.

A remote terminal 9 and a microhub 11 will now be described in more detail.

### Remote Terminal

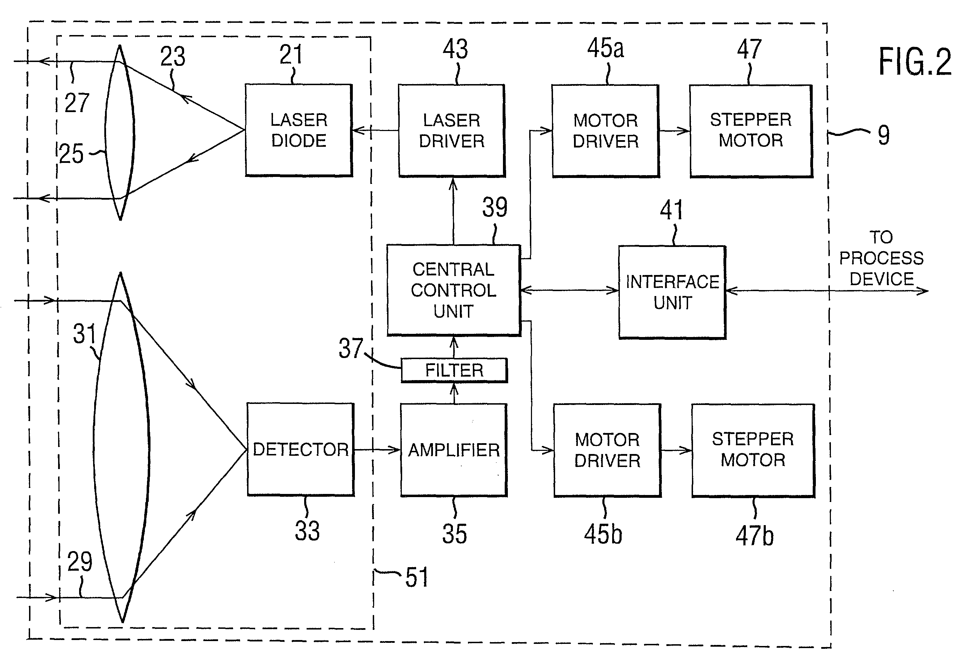

Figure 2 schematically shows in more detail the main components of one of the remote terminals 9 shown in Figure 1. As shown, the remote terminal 9 includes a laser diode 21 which outputs a beam 23 of linearly-polarised coherent light. The remote terminals 9 are designed to communicate with a control centre 1 within a range of 200 metres with a high link availability. To achieve this, the laser diode 21 is a 50mW laser diode which outputs a laser beam having a wavelength of 785nm.

The output light beam 23 passes through a lens 25, hereafter called the collimating lens 25, which reduces the angle of divergence of the light beam 23 to form a substantially low divergence light beam 27. The divergence of the low divergence light beam 27 can be varied by varying the distance between the collimating lens 25 and the laser diode 21. However, a perfectly collimated light beam is not possible due to diffraction at the emitting aperture of the laser diode 21. The collimating lens 25 is a low aberration lens, so that the low divergence beam 27 has a relatively uniform wavefront, with a 50mm diameter and an F-number which is just large enough to collect substantially all the light emitted by the laser diode 21.

Although the divergence of the light beam 27 is low, the size of the light beam 29 incident on the remote terminal 9, after reflection by the corresponding microhub 11 at the local distribution node 7, is larger than that of the low-divergence light beam 27. A portion of the return light beam 29 is incident on a lens 31, hereafter called the downlink detection lens 31, which focusses light from the received light beam 29 onto a detector 33, which in this embodiment is an avalanche photodiode. The downlink detection lens 31 has a diameter of 100mm but is not required to be of as high quality as the collimating lens 25 because its primary purpose is simply to direct as much light as possible onto the detector 33.

The diameter of the detection surface of the detector 33 is 500µm whereas the diameter of the light spot on the detection surface formed by the downlink detection lens 31 focussing light from the received light beam 29 is approximately 50µm. This relaxes the requirement for precise optical alignment of the laser diode 21 and the detector 33.

The detector 33 converts the received light beam into a corresponding electrical signal which varies in accordance with the modulation provided at the control centre 1. The electrical signal is amplified by an amplifier 35 and then filtered by a filter 37. The filtered signals are input to the central control unit 39 which performs a clock recovery and data retrieval operation to regenerate the data from the control centre 1. The retrieved data is then passed to an interface unit 41 which is connected to the corresponding process device 3.

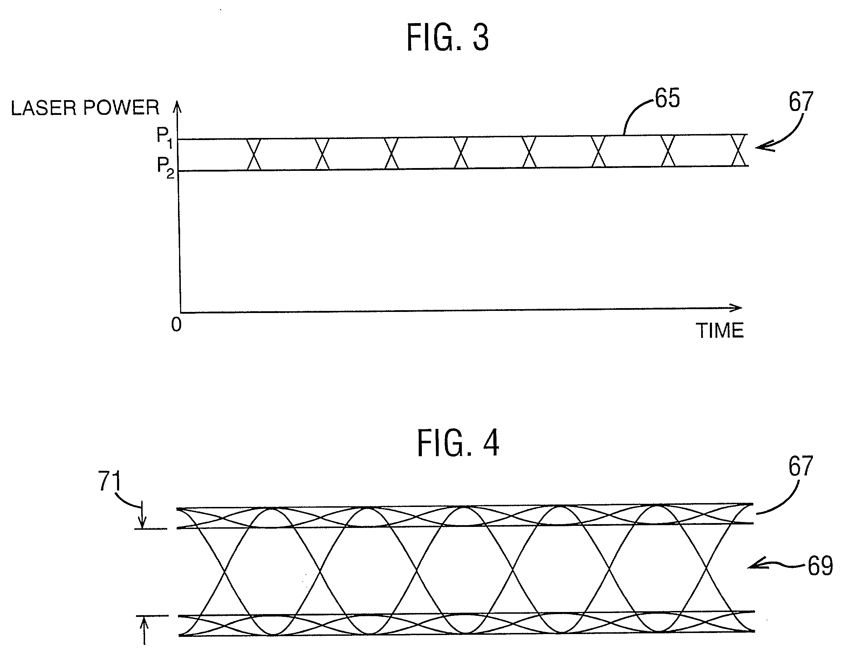

The interface unit 41 also directs uplink data (to be transmitted to the control centre 1) from the process device 3 to the central control unit 39, which sends control signals to a laser driver 43 so that the light beam 23 output by the laser diode 21 is modulated in accordance with the uplink data. In order to allow full duplex communication between the remote terminal 9 and the microhub 11, a small signal modulation scheme is employed in which a small amplitude modulation is applied to the light beam 23 output by the laser diode 21. Figure 3 illustrates this modulation and shows the CW laser level 65 and the small signal modulation 67 applied to it. In particular, the power level of the light beam 23 output by the laser diode 21 is modulated between an upper output power level P₁ and a lower output power level P₂.

This uplink modulation data becomes an additional noise source for the downlink data. This is illustrated in Figure 4 which shows an eye diagram for the downlink data 69, which includes the interfering uplink data 67, and the consequent reduction in the noise margin 71.

However, if the uplink modulation depth is kept sufficiently low, then both the uplink and the downlink can operate with equal bandwidth.

The optical link 5 between a remote terminal 9 and a microhub 11 essentially acts as a data pipe, i.e. data received by the remote terminal 9 is transmitted without any further encoding (for example without adding additional error detection and correction bits) to the microhub 11 and vice versa. In order to transmit information concerning the optical link 5 between the remote terminal 9 and the microhub 11, a separate "operation and maintenance" (OAM) channel is formed by modulating the timing of the data clock signal in accordance with OAM data. When performing the clock and data recovery operation, the central control unit 39 monitors the clock timing to recover OAM data sent by the microhub 11 at the other end of the optical links 5.

The central control unit 39 is also connected to a first motor driver 45a for supplying drive signals to a first stepper motor 47a, and to a second motor driver 45b for supplying drive signals to a second stepper motor 47b. The laser diode 21, the collimating lens 25, the detector 33 and the downlink detection lens 31 are mounted together to form a single optical assembly 51, and the first and second stepper motors 47 are operable to rotate the optical assembly 51 about respective orthogonal axes. When the remote terminal 9 is mounted, it is typically oriented so that the first and second stepper motors 47 rotate the optical assembly 51 about respective axes orientated at 45° either side of the vertical. In this way, the direction of the emitted light beam can be varied to align with the corresponding microhub 11.

### Microhub

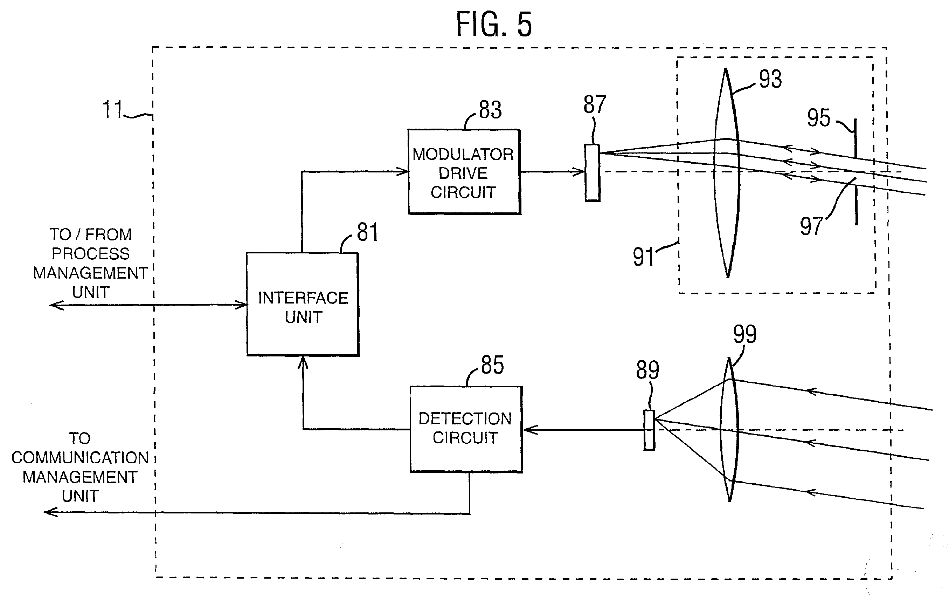

Figure 5 schematically illustrates the main components of one of the microhubs 11. As shown, the microhub 11 includes an interface unit 81, which is connected to the process management unit 7. The interface unit 81 is also connected to an input of a modulator drive circuit 83 and an output of a detection circuit 85. An output of the modulator drive circuit 83 is connected to an optical modulator 87, and an input of the detection circuit 85 is connected to a photodiode 89.

The optical modulator 87 includes a quantum confined Stark effect (QCSE) device including a p-i-n diode having one hundred quantum wells formed in the intrinsic layer and a Bragg reflector formed in the n-conductivity type layer. Light received by the telecentric lens 91 is directed through the p-conductivity type layer of the p-i-n diode to the intrinsic layer, where the amount of absorption of the light varies in accordance with a potential difference applied across the p-i-n diode using the modulator drive circuit 83, and then the Bragg reflector reflects the light back through the intrinsic layer (where further absorption takes place) towards the telecentric lens 91.

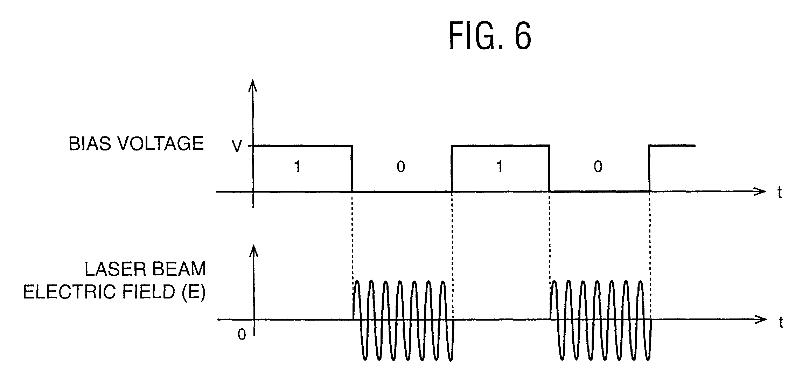

The interface unit 81 directs downlink data signals received from the process management unit 7 to the modulator drive circuit 83, which generates corresponding drive signals for the optical modulator 87. In the ideal case, as illustrated in Figure 6, to transmit a binary 1 a zero voltage bias is applied across the p-i-n diode of the QCSE modulator 87, resulting in the light from the remote terminal 9 being reflected back from the QCSE modulator 87, and to transmit a binary 0 a DC bias voltage is applied across the p-i-n diode of the QCSE modulator 87, resulting in no reflected light being transmitted back to the remote terminal 9 from the QCSE modulator 87. In practice, however, with one hundred quantum wells formed in the intrinsic layer, the QCSE modulator 87 reflects back about 40% of received light when a reverse bias of 5V is applied and reflects back about 10% of received light when a reverse bias of 15V is applied. This gives a difference of about 75% between the amount of light which is reflected back to the remote terminal 9 when a binary 0 is transmitted and when a binary 1 is transmitted.

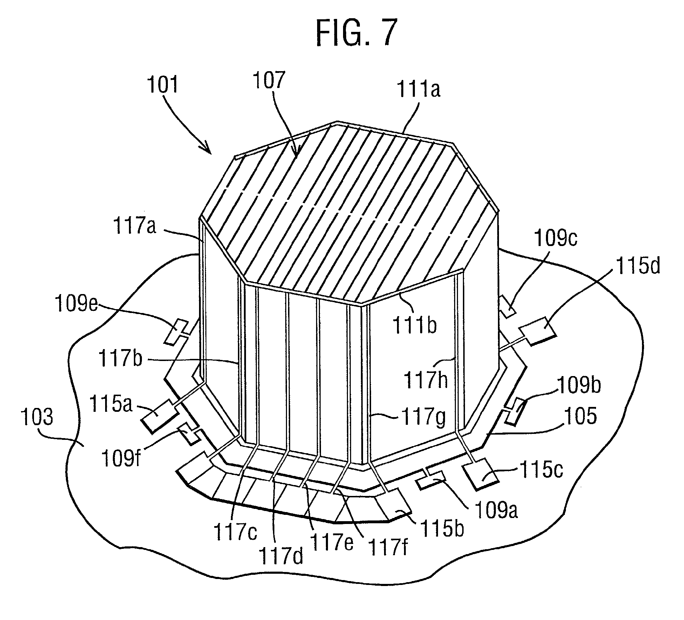

The modulator 87 is positioned approximately in the back focal plane of the telecentric lens 91, which is schematically represented in Figure 7 by a lens element 93 and a stop member 95 having a central aperture 97 positioned in the front focal plane. In practice, more than one lens element is used in the telecentric lens 91 with the exact arrangement being a design choice depending upon the particular requirements of installation. The size of the aperture 97 is also a design choice, with a large aperture 97 transmitting more of the light from the corresponding remote terminal 9 than a small aperture 97 but requiring a more complex and expensive lens arrangement to focus the light than is required with the small aperture 97.

The telecentric lens 91 is axially symmetric and maps an active area on the modulator 87 to a conical field of view with a half-angle of between 0.5° and 2.5°. In particular, the telecentric lens 91 focuses incident light at a position within the back focal plane which depends upon the angle of incidence of the light so that different angles of incidence are mapped to different positions on the active area of the modulator 87. Further, the principal rays transmitted through the telecentric lens 91 are incident perpendicular to the back focal plane and therefore the modulator 87 reflects light incident along a principal ray back along its path of incidence. In this way, the modulator 87 and the telecentric lens 91 act as a retro-reflector.

An advantage of using the telecentric lens 91 is that the efficiency of modulation (i.e. the modulation depth) of existing optical modulators 87 generally depends upon the angle at which the light beam hits the modulator 87, and using the telecentric lens 91 ensures that the principal rays of the light beams are incident parallel to the optical axis of the modulator 87 regardless of the position of the remote terminal 9 generating the incident light beam within the field of view of the telecentric lens 91. The dependency of the efficiency of modulation upon the position of the remote terminal 9 relative to the control centre 1 is therefore substantially removed. A further advantage of using a telecentric lens 91 is that, if required, the position of the modulator 87 can be moved slightly out of the back focal plane of the telecentric lens in order to reduce the beam divergence of the reflected light beam, thereby increasing the signal level at the remote terminal 9.

The interface unit 81 also receives uplink data signals generated by the detection circuit 85 from electrical signals formed by light incident on the photodiode 89, and transmits the received uplink data signals to the process management unit 7. The detection circuit 85 also retrieves the OAM data signal from the remote terminal 9 and transmits the retrieved OAM data signal to the communication management unit 13.

The photodiode 89 is placed in the back focal plane of the uplink detection lens 99. As schematically shown in Figure 5, the collection aperture and focal length of the uplink detection lens 99 are less than those of the telecentric lens 91. This allows the active area of the photodiode 89 to be reduced in comparison with the optical modulator 87, which is advantageous because this reduces the capacitance (and therefore the response time) of the photodiode 89. The reason why the collection aperture of the uplink detection lens 99 can be made less than that of the telecentric lens 91 is that the photodiode 89 need only detect sufficient light to be able to recover the uplink data signal and OAM signal, whereas the telecentric lens 91 must collect enough light to ensure that the retro-reflected light beam has enough energy for a sufficient signal level to be achieved at the detector 33 in the remote terminal 9.

A more detailed description of the QCSE modulator 87, modulator drive circuit 83 and detection circuit 85 of a microhub 11 will now be given.

### The QCSE Modulator

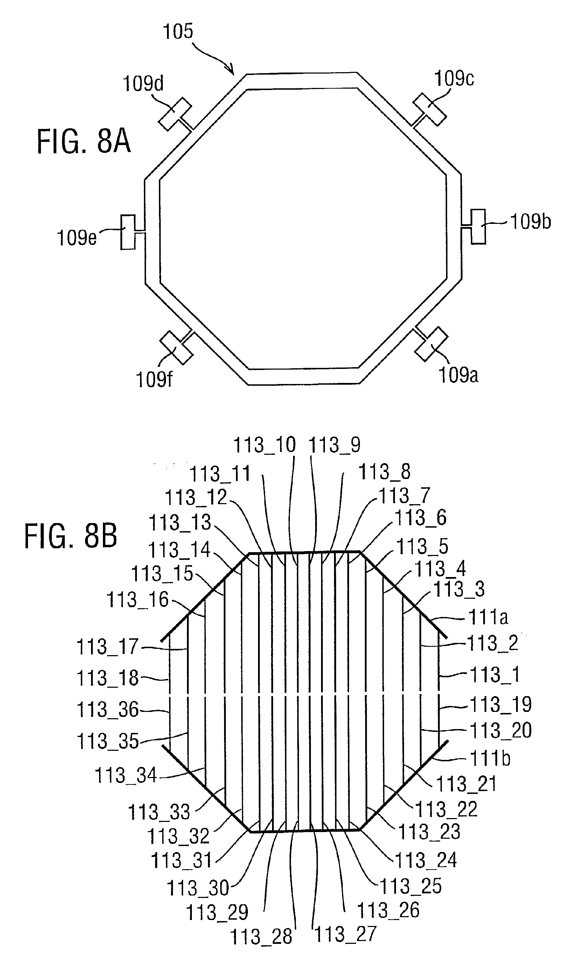

Figure 7 shows a schematic perspective view of the modulator 87. As shown, the modulator 87 is formed by a mesa-structure 101, in the form of an octagonal right prism, on a substrate 103. A first electrode 105 is formed by an octagonal ring around the base of the mesa-structure 101, and a second electrode 107 is formed at the top surface of the mesa-structure 101. The first electrode 105 includes six contact pads 109a to 109f which are shown most clearly on the plan view of the first electrode illustrated in Figure 8A.

Figure 8B shows a plan view of the second electrode formed on the top surface of the mesa-structure 101. As shown, the second electrode 107 is formed by first and second C-shaped conductors 111a, 111b with eighteen strip conductors 113_1 to 113_18 extending from the first C-shaped conductor 111a toward the second C-shaped conductor 111b, and a further eighteen strip conductors 113_19 to 113_36 extending from the second C-shaped conductor 111b toward the first C-shaped conductor. The strip conductors 113 are all parallel to each other with the eighteen strip conductors 113 connected to the first C-shaped electrode 111a being respectively aligned with the eighteen strip conductors connected to the second C-shaped conductor 111b to form eighteen pairs of strip conductors 113. Each pair of strip conductors 113 is separated by a small gap which allows an etchant to flow between the strip conductors 113 during fabrication of the modulator 87.

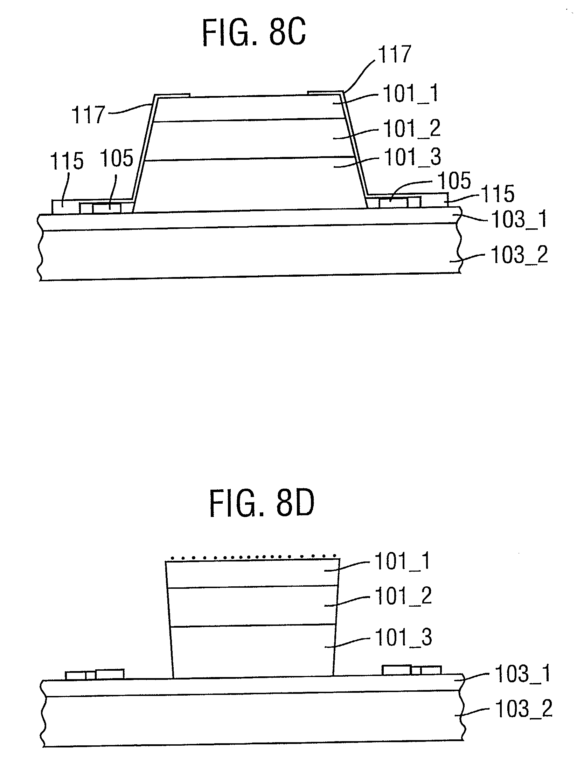

As shown for the second C-shaped conductor 111b in Figure 7, each C-shaped conductor 111 is connected to three connection pads 115a to 115c via eight conductive tracks 117a to 117h which extend down the side walls of the mesa-structure 101 and over the first electrode 105. An insulating layer (not shown) is provided between the side wall of the mesa-structure 101 and the conductive tracks 117 and between the first electrode 105 and the conductive tracks 117. Figure 8C shows a cross-section of the modulator 87 in a plane perpendicular to the surface of the semiconductor substrate 103 and parallel with the strip electrodes 113, and Figure 8D shows a cross-section of the modulator 87 through a plane perpendicular to the surface of the semiconductor substrate 103 and perpendicular to the strip electrodes 113. As shown, the side walls of the mesa-structure 101 are not perpendicular to the surface of the semiconductor substrate 103. In particular, the side walls over which the conductive tracks 117 extend slope inwardly from the base to the top of the mesa-structure 101. This allows the conductive tracks to be deposited upon these sloping side walls. As shown in Figure 8D, the side walls of the mesa-structure over which no tracks extend slope outwardly from the base to the top of the mesa-structure 101 so that the top of the mesa-structure 101 partly overhangs the base of the mesa-structure 101 and therefore conductive tracks cannot be deposited on them.

As shown in Figures 8C and 8D, the modulator 87 comprises five layers, three of which are formed in the mesa-structure 101. These layers are based on Gallium Arsenide (GaAs) and Aluminium Gallium Arsenide (AlGaAs).

In particular, the mesa-structure 101 is formed by a p-conductivity type GaAs layer 101_1 formed on an intrinsic AlGaAs layer 101_2 having one hundred quantum wells formed therein, which is in turn formed on a n-conductivity type AlGaAs layer 101_3 having a Bragg reflector formed therein. The mesa-structure 101 is formed on an n-conductivity GaAs contact layer 103_1 which is in turn formed on an intrinsic GaAs substrate 103_2.

The strip conductors 113 distribute the drive signal from the modulator drive circuit 83 over the surface of the p-conductivity layer 101_1. This reduces the effective series resistance of the modulator 87 in comparison with the case where the strip electrodes 125 are not included (for example, if the second electrode is formed by only the C-shaped conductors 111) because current flowing through the centre of the mesa-structure 101 is able to flow along the strip conductors 113 to the centre of the top surface of the mesa-structure 101.

The strip conductors 113 are formed in straight lines with a width of 2µm. This width is sufficient for the strip conductors 113 to have a low resistance in comparison with the p-conductivity type GaAs layer 101_1 without covering a significant proportion of the active area. In particular, the telecentric lens 91 forms spots on the modulator 87 with a diameter in the region of 20 to 80µm, and therefore the strip conductors 113 do not significantly affect the retro-reflected light beam.

### The Modulator Drive Circuit

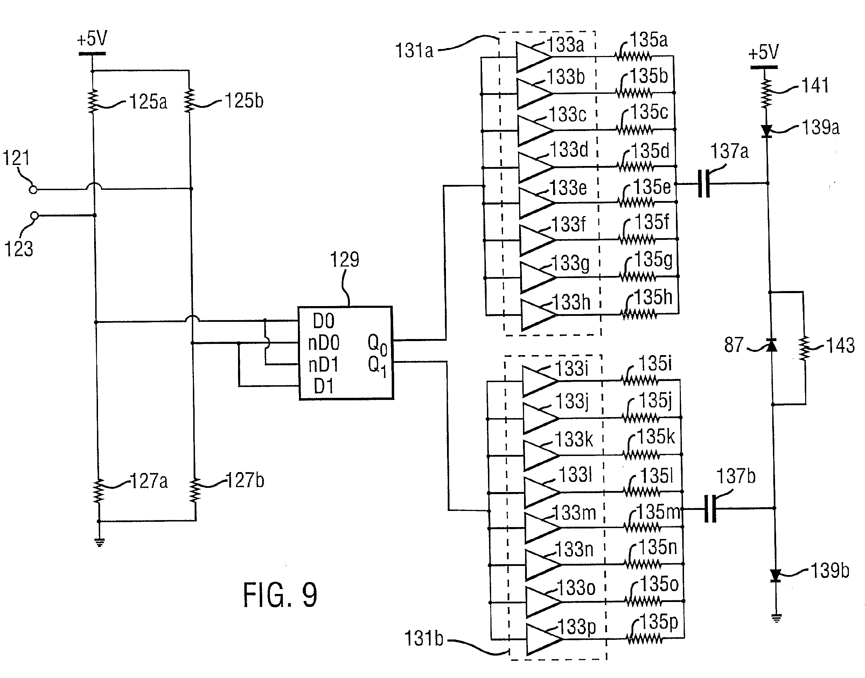

Figure 9 shows the main components of the modulator drive circuit 83, together with the modulator 87. As shown, the modulator drive circuit 83 includes two input lines 121,123 via which downlink data are received from the interface unit 81 as a PECL (positive emitter-coupled logic) differential data signal. The input lines 121,123 are connected, via respective 75 ohm parallel terminations (each formed by a 91 ohm resistor 125a,125b and a 470 ohm resistor 127a,127b), to a dual PECL-to-TTL converter 129 (integrated circuit SV100ELT23). The two pairs of PECL inputs D0,nD0 and D1,nD1 of the PECL-to-TTL converter 129 are both driven by the downlink data signal but are connected in anti-phase so that the two TTL outputs Q0 and Q1 are in anti-phase with each other.

The TTL outputs Q0,Q1 of the PECL-to-TTL converter 129 are respectively connected to first and second octal CMOS line drivers 131a,131b (integrated circuit 74ACT245), hereafter called driver chips 131, which each have eight CMOS buffers 133a-133h, 133i-133p. The capacitance of the p-i-n diode of the modulator 87 is approximately 400pF under depleted conditions and a 74ACT CMOS buffer 133 has an output impedance in the region of 20 ohms. Therefore, if a single 74ACT CMOS buffer 133 is used to drive the modulator 87, the RC time constant for varying the electric field across the quantum wells of the modulator 87 is in the region of 8ns. This is too slow for communicating at data rates in excess of 100 Mbits/second.

As shown in Figure 9, each output Q0,Q1 of the PECL-to-TTL converter 129 is connected in common to all eight CMOS buffers 133 of the corresponding driver chip 131, and the output of the eight CMOS buffers 133 of each driver chip 131 are connected in common, via respective resistors 135a to 135p, to a respective one of first and second capacitors 137a,137b. By driving all eight CMOS buffers 133 of a driver chip 131 in parallel, the potential difference across the modulator 87 can be switched more quickly because the output impedance of the driver, and therefore the RC time constant, is reduced. The switching times of individual CMOS buffers 133 in a single driver chip 131 vary slightly and therefore the resistors 135, which each have a resistance of 10 ohms, are included in the modulator drive circuit 83 to reduce temporary current surges, sometimes referred to as shoot-through, which occur when two of the CMOS buffers 133 of the same driver chip 131 are in different states.

Each of the first and second capacitors 137a,137b have a capacitance of 100nF. The first capacitor 137a is connected to the cathode of the p-i-n diode forming the modulator 87, whereas the second capacitor 137b is connected to the anode of the p-i-n diode forming the modulator 87. The cathode of the modulator 87 is also connected, via a diode 139a and a resistor 141, to a 5V power supply which prevents the voltage at the modulator cathode falling below approximately 4.3V, and the anode of the modulator 87 is also connected, via a diode 139b, to ground which prevents the voltage at the modulator anode going above approximately 0.7V. A bleed resistor 143, having a resistance of 1 kilo-ohm, is connected between the anode and the cathode of the modulator 87 to provide a DC path for the photocurrent generated by the modulator 87 when illuminated.

When the downlink data signal is driven into a HIGH state, the outputs of the CMOS buffers 133 of the first driver chip 131 are driven high and the outputs of the CMOS buffers 133 of the second driver chip 131 are driven low. This causes the voltage at the cathode of the modulator 87 to be 9.3V and the voltage at the anode of the modulator 87 to be -4.3V, resulting in a potential difference between the anode and the cathode of the modulator 87 of approximately 13.6V. When the downlink data signal is driven into a LOW state, the outputs of the CMOS buffers 133 of the first driver chip 131 are driven low and the outputs of the CMOS buffers 133 of the second driver chip 131 are driven high. This causes the voltage at the cathode of the modulator 87 to be approximately 4.3V and the voltage at the anode of the modulator 87 to be approximately 0.7V, resulting in a potential difference between the anode and the cathode of the modulator 87 of approximately 3.6V. In this way, a 10V voltage swing is applied across the modulator 87 in dependence on the downlink data.

### The Detection Circuit

The electric signal from the detector 89 consists of three main components: the modulated part of the incoming light beam from a corresponding remote terminal 9; the unmodulated part of the incoming light beam from the corresponding remote terminal 9; and background light.

The respective amplitudes of these three components varies, due to changes in the transmission path, at a rate of up to approximately 100kHz.

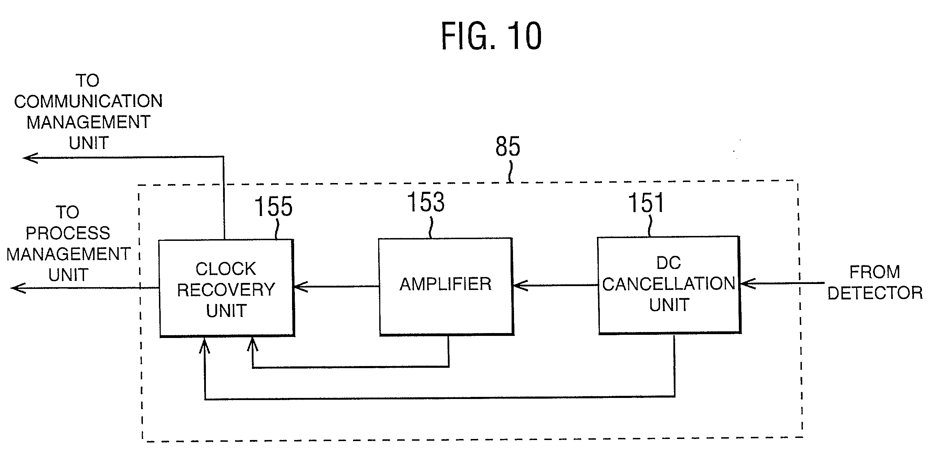

Figure 10 shows the main components of the detection circuit 85 of the microhub 11. As shown, the electric signal from the photodiode 89 is input to a DC cancellation unit 151, which removes most of the components of the electrical signal relating to the unmodulated part of the incoming light beam and the background light, and also reduces any low frequency variations caused by changes to the transmission path. The remainder of the electrical signal is output by the DC cancellation circuit 151 and input to an amplifier 153. The amplified signal output by the amplifier 153 is input to a clock recovery unit 155, which recovers the uplink data signal and any OAM signal from the remote terminal 9. The DC cancellation unit 151 also outputs a signal representative of the total DC received signal strength, hereafter called the DC-RSSI signal, to the clock recovery unit 155 and the amplifier 153 outputs a signal representative of the signal strength at the data transmission frequency to the clock recovery unit 155, hereafter called the AC-RSSI signal. The clock recovery unit 155 forwards the DC-RSSI signal and the AC-RSSI signal to the communication management unit 13.

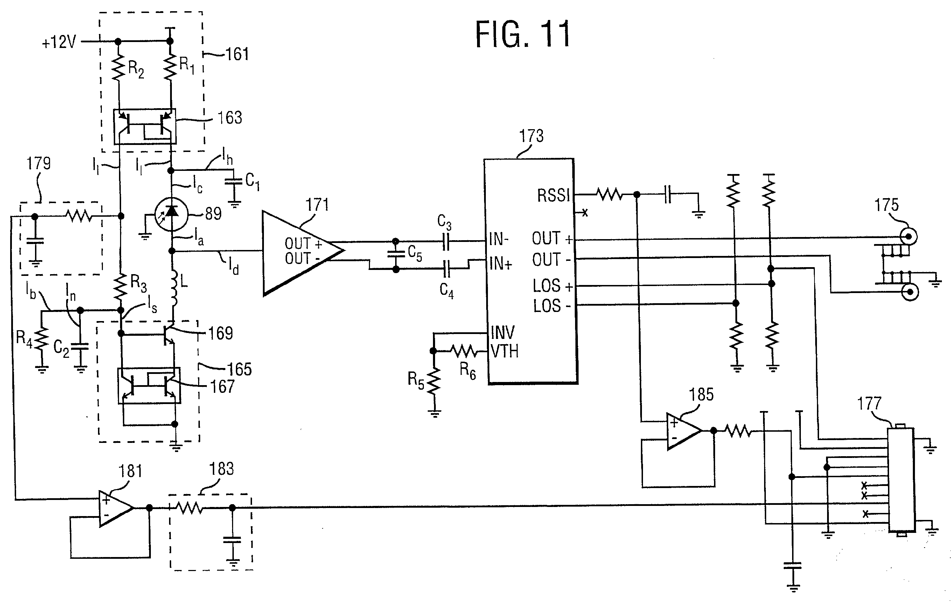

Figure 11 shows in more detail the DC cancellation unit 151 and the amplifier 153 of the detection circuit 85. As shown, the cathode of the photodiode 89 is connected to electrical ground via a capacitor C₁, which in this embodiment has a capacitance of 3.3nF, and to the input branch of a first current mirror 161. The first current mirror 161 is formed by a conventional p-n-p double transistor with matched emitter resistors R₁ and R₂, each having a resistance of 470Ω.

The output branch of the first current mirror 161 is connected to one end of a third resistor R₃, which in this embodiment has a resistance of 470Ω. A fourth resistor R₄, which in this embodiment has a resistance of 100kΩ, and a second capacitor C₂, which in this embodiment has a capacitance of 10nF, are connected in parallel between the other end of the third resistor R₃ and electrical ground. The other end of the third resistor R₃ is also connected to the input branch of a second current mirror 165, which in this embodiment is a Wilson mirror formed by a conventional n-p-n double transistor 167 and a single n-p-n transistor 169. The output branch of the second current mirror 165 is connected, via an inductor L having an inductance of 47µH, to the anode of the photodiode 89. The anode of the photodiode 89 is also connected to the input to a pre-amplifier 171.

When light is incident on the photodiode 89, a current I_{c} flows through the cathode of the photodiode and a corresponding current Iₐ flows through the anode of the photodiode. The cathode current I_{c} consists of a high frequency part Iₕ, which flows to electrical ground via the capacitor C₁, and a low frequency part Iₗ, which is input to the first current mirror 161. The 3dB cut-off frequency between the high frequency part Iₕ and the low frequency part Iₗ is 100kHz. In this way, the data traffic component, at over 100Mbits/s, flows through the capacitor C₁ rather than the first current mirror 161.

The first current mirror 161 causes a mirror current matching the low frequency part Iₗ to flow through the third resistor R₃. The voltage at the input of the second current mirror 165 is limited at approximately 1.4V by the Wilson mirror arrangement and therefore a current, hereafter called the bleed current I_{b}, of up to approximately 14µA flows to electrical ground through the fourth resistor R₄. A high frequency noise current Iₙ similarly flows to electrical ground through the second capacitor C₂. The current Iₛ flowing into the input branch of the second current mirror 165 is therefore substantially given by:

**I**_{**s**} **= I**_{**l**} **- I**_{**b**} **- I**_{**n**} (1)

The second current mirror 165 causes a mirror current matching the current Iₛ to flow through the output branch of the second current mirror 165. The detection current I_{d} flowing into the pre-amplifier 171 is therefore substantially given by:

**I**_{**d**} **= I**_{**a**}**- I**_{**s**} (2)

In this way, the detection current I_{d} corresponds primarily to the modulated component of the incoming light beam. However, some low frequency current, substantially equivalent to the bleed current I_{b}, also forms part of the detection current I_{d}. This prevents current being sourced to the output branch of the second current mirror 165 from the input of the pre-amplifier 171.

The pre-amplifier 171 is a MAX3963 transimpedance pre-amplifier which is available from Maxim Integrated Products. The pre-amplifier 171 converts an input current signal into a corresponding differential voltage signal output from a non-inverting output port (OUT+) and an inverting output port (OUT-). The non-inverting output port (OUT+) of the pre-amplifier 171 is capacitively coupled, via a third capacitor C₃, to an inverting input (IN-) of a limiting amplifier 173, which in this embodiment is a MAX3964 limiting amplifier available from Maxim Integrated Products. Similarly the inverting output (OUT-) of the pre-amplifier 171 is capacitively coupled, via a fourth capacitor C₄, to a non-inverting input (IN+) of the limiting amplifier 173. A fifth capacitor C₅ is connected between the non-inverting and inverting outputs of the pre-amplifier 171 to reduce high frequency noise.

The limiting amplifier 173 outputs, via non-inverting and inverting outputs (OUT+,OUT-), a PECL (positive emitter-coupled logic) differential data signal which is output to the clock recovery unit 155 via a first connector 175, which in this embodiment is a fifty ohm, co-axial cable connector.

The limiting amplifier 173 also outputs a signal, via complementary loss-of-signal output ports LOS+, LOS-indicating when the input power level falls below a threshold determined by fifth and sixth resistors R₅ and R₆. The signal output by the non-inverting loss-of-signal output LOS+ is output to the clock recovery unit 155 via a second connector 177, which in this embodiment is a ribbon cable connector.

As discussed above, the voltage at the input to the second current mirror 165 is limited to approximately 1.4V by the Wilson mirror arrangement and the current flowing through the third resistor R₃ matches the low frequency part Iₗ of the cathode current I_{c}. The voltage level at the output of the first current mirror 161 is therefore representative of the detected low frequency signal level, hereafter called the DC signal level. This voltage level is sampled by connecting the interconnection between the output of the first current mirror 161 and the third resistor R₃, via a first low pass filter 179, to a first unity gain buffer 181. The output of the first unity gain buffer 181 is connected, via a second low pass filter 183, to the second connector 177. In this way, the DC-RSSI signal is transmitted to the clock recovery unit 155.

The limiting amplifier 173 includes a RSSI port which outputs the AC-RSSI signal, via a second unity gain buffer 185, to the second connector 177 for transmission to the clock recovery unit 155.

The clock recovery unit 155 receives, via the first connector 175, the differential data signal output by the limiting amplifier 173 and performs a clock recovery and data regeneration operation during which the OAM signal is retrieved by monitoring variations in the clock timing. The uplink data signal regenerated by the clock recovery unit 155 is transmitted to the Ethernet switch 13, and the OAM signal is transmitted to the network management unit 15 along with the LOS signal, the DC-RSSI signal and the AC-RSSI signal.

### SECOND EMBODIMENT

In the first embodiment, separate microhubs are provided for each of the remote terminals. Further, the light source for each optical link is located at the remote terminal and a retro-reflecting modulator is located at each microhub. A second embodiment will now be described in which at least some of the microhubs 11 of the first embodiment are replaced by a local distribution hub 1001 which is able to communicate with plural remote terminals 1003.

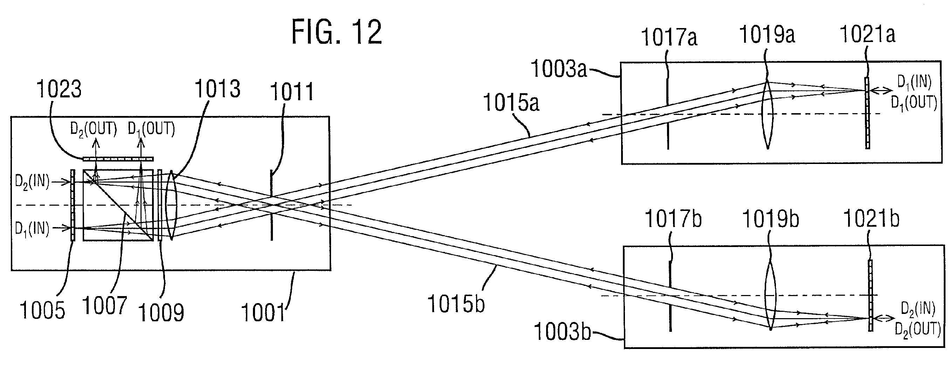

As shown in Figure 12, the local distribution hub 1001 includes an emitter array of 1005, which comprises a two-dimensional pixel array with a vertical cavity surface emitting laser (VCSEL) in each pixel. The use of VCSELs is preferred because the emitter array 1005 can then be manufactured from a single semiconductor wafer, without having to cut the wafer. This allows a higher density of lasing elements than would be possible with traditional diode lasers. Each VCSEL in the emitter array 1005 outputs a linearly-polarised divergent light beam, the divergence being primarily caused by diffraction at the emitting aperture of the VCSEL.

The linearly-polarised light emitted by a VCSEL of the emitter array 1005 is transmitted through a polarisation beam splitter 1007 and is incident on a quarter-wave plate 1009, which converts the linearly-polarised light into circularly-polarised light. The circularly-polarised light then passes through a telecentric lens, represented in Figure 12 by a stop member 1011 positioned in the front focal plane of a lens element 1013, with the emitter array 1005 being located in the back focal plane of the telecentric lens. As shown, the lens element 1013 collects the diverging beams emitted by respective VCSELs and converts them into corresponding low-divergence light beams 1015a, 1015b. As those skilled in the art will appreciate, the angle at which each light beam 1015 leaves the exit pupil of the telecentric lens depends on the spatial position within the emitter array 1005 of the VCSEL emitting the corresponding divergent beam. An advantage of using a telecentric lens system in the local distribution hub 1001 is that the collection efficiency of light from the emitter array 1005 is independent of the position within the emitter array 1005 from where the light originated.

As described above, each of the pixels of the emitter array 1005 maps to a respective different angle within the field of view corresponding to the emitter array 1005. As shown in Figure 12, a first light beam 1015a from the local distribution node 1001 is incident on a first remote terminal 1003a, and a second light beam 1015b from the local distribution node 1001 is incident on a second remote terminal 1003b. In this embodiment, the VCSELs in the emitter array 1005 are selectively addressable and therefore respectively different data can be transmitted to the first and second remote terminals 1003. In particular, a data signal D₁(IN) is used to modulate the output of the VCSEL corresponding to the direction of the first remote terminal 1003a and a signal D₂(IN) is used to modulate the output of the VCSEL corresponding to the direction of the second remote terminal 1003b.

Each remote terminal 1003 includes a telecentric lens, schematically represented in Figure 12 by a stop member 1017a, 1017b and a lens element 1019a, 1019b, which focusses received light onto an element of a detector/modulator array 1021a, 1021b. The detector/modulator array 1021a of the first remote terminal 1003a detects the first light beam 1015a to recover the signal D₁(IN) and returns a first reflected light beam which is modulated by a data signal D₁(OUT). Similarly, the detector/modulator array 1021b of the second remote terminal 1003b detects the second light beam 1015b to recover the signal D₂(IN) and returns a second reflected optical beam which is modulated by a data signal D₂(OUT).

In this embodiment, each element of the detector/modulator arrays 1021 comprises a QCSE device, in the form of a p-i-n diode, which alternately acts as a modulator (as described in the first embodiment) and a detector.

The optical beams 1015 reflected by the remote terminals 1003 are directed back to the local distribution hub 1001 and pass though the stop member 1011, the lens element 1013 and the quarter-wave plate 1009, which converts the circular polarisation of the reflected beam into a linear polarisation that is of orthogonal to the polarisation of light beams emitted by the emitter array 1005. The reflected light beams are then incident on the polarisation beam splitter 1007 which reflects the light beams onto respective detector elements of a detector array 1023 whose positions respectively correspond to the directions of the incoming reflected beams. In this way, the reflected light beam from the first remote terminal 1003a is directed to a first detector element, which recovers the data signal D₁(OUT), and the reflected light beam 1015b from the second remote terminal 1003b is directed to a second detector element which recovers the data signal D₂(OUT).

### MODIFICATIONS AND FURTHER EMBODIMENTS

In the above embodiments, the process management unit either receives measurement signals from a remote sensor or transmits control signals to a remote actuator. The sensor could be, for example, a temperature sensor, a weight sensor, a position sensor or an electrical current sensor. The actuator could be, for example, a motor, a heater or an electrical relay.

Examples of manufacturing systems to which the invention can be applied include those having automated production lines (for example, for manufacturing cars). The invention could also be applied to a chemical production system (for example, for manufacturing pharmaceuticals).

In the above embodiment, a duplex communication link is established between each remote terminal and the process management unit. It will be appreciated that if the remote terminal is only connected to a sensor, then a simplex link could be used in which the retro-reflecting modulator was positioned at the remote terminal side of the optical link. Alternatively, if the remote terminal was only connected to an actuator, then a simplex communications link could be used with the retro-reflecting modulator beam located at the process management unit side of the optical link.

In the first embodiment, the modulator includes a mesa-structure generally having the shape of an octagonal right prism. Other shapes of mesa-structure could be used, for example a cylinder with a circular cross-section. However, an octagonal cross-section is preferred because the mesa-structure is easier to manufacture compared with a circular cross-section, but still has an approximately circular shape so that the field of view of the telecentric lens maps efficiently onto the top surface of the mesa-structure. It is important that the field of view of the telecentric lens maps efficiently onto the active area because any portion of the active area which is not mapped to the field of view serves no useful purpose but still has an associated capacitance which slows the switching speed of the electric field across the modulator.

In the first embodiment, a plurality of parallel strip conductors traverse the active area to reduce the effective series resistance of the modulator. Those skilled in the art will appreciate that the exact layout of the strip conductors is not critical, and other strip conductor layouts are possible.

The modulator described in the first embodiment includes Gallium Arsenide (GaAs) and aluminium Gallium Arsenide (AlGaAs) layers. Those skilled in the art will appreciate that other semiconductor materials could be used. For example, other III-V semiconductor materials such as Indium Gallium Arsenide (InGaAs) could be used. Further, QCSE modulators have also been fabricated using II-VI semiconductor materials.

In the first embodiment, CMOS line drivers are used to switch the electric field across the multiple quantum wells of the modulator. It will be appreciated that other forms of push-pull driver could be used. For example, instead of using a p-channel MOSFET and an n-channel MOSFET, complementary bipolar transistors could be used. Those skilled in the art will also appreciate that the line drivers will typically include other circuitry, such as Schmidt triggers, to improve their performance.

Those skilled in the art will appreciate that many different types of detector could be used in the microhub and the user terminal. For example, a phototransistor could be used. In general, a detector is selected based on the required bit rate and sensitivity, the wavelength of the light beam, and cost considerations.

In the above embodiment, an integrated semiconductor device having a QCSE modulator formed on a Bragg mirror is used. As those skilled in the art will appreciate, other types of reflectors and modulators could be used. For example, a plane mirror may be used as the reflector and a transmissive modulator (such as liquid crystal) could be provided between the telecentric lens and the mirror. Further, those skilled in the art will appreciate that the retro-reflector need not be a telecentric lens. Alternatively, the retro-reflector could be formed by a corner-cube reflector or a cat's-eye reflector. However, use of a telecentric lens is preferred due to the ability to adjust the divergence of the retro-reflected beam.

In the first embodiment, it is preferred that the field of view of the modulator units is conical with a half-angle between 0.5° and 2.5°. This enables the telecentric lens to be relatively cheaply manufactured with a large collection aperture, while still not requiring precision alignment with a user terminal.

In the above embodiment, the optical links between the microhubs and the user terminals act as data pipes. Alternatively, prior to transmission over the optical link, data could be protocol encoded to include, for example, error detection and correction bits. Further, the OAM data could be multiplexed with the uplink data.

In the above embodiments, a 50mW laser diode was provided in each of the remote terminals, so that the user terminals can communicate with the corresponding local distribution node within a range of about 150 metres. In applications where the distance between the user terminals and the local distribution nodes is relatively small, such as a few metres, lower powered laser diodes such as those which are commonly used in CD players or light emitting diodes could be used.

Those skilled in the art will appreciate that the term "light" includes electromagnetic waves in the ultraviolet and infra-red regions of the electromagnetic spectrum as well as the visible region. Although the embodiments described above have used laser beams with a wavelength of about 785nm, other light beams could be used. In particular, a wavelength of about 1.5 microns is an attractive alternative because it is inherently more eye-safe and emitters and detectors have been developed for this wavelength for optical fibre communications.

Although the lenses in the microhubs and the remote terminals have been schematically represented by a single lens, it will be appreciated that in practice each lens may have a plurality of lens elements.

The present invention is not limited by the exemplary embodiments described above, and various other modifications and embodiments will be apparent to those skilled in the art.

## Claims

1. A manufacturing system comprising:
a production system operable to process starting materials to output a product;
a sensor operable to generate a data signal representative of a parameter of the production system, the sensor having associated therewith a first signalling device comprising a retro-reflecting modulator operable to: i) receive an incoming light beam; ii) modulate the incoming light beam in accordance with the data signal; and iii) retro-reflect the incoming light beam, thereby transmitting a modulated light beam conveying said data signal; and
a system manager having associated therewith a second signalling device, wherein the second signalling device comprises: i) a light source operable to generate a light beam; ii) a transmitter operable to transmit the generated light beam to said first signalling device; iii) a receiver operable to receive the modulated light beam from said first signalling device; and iv) a processor operable to retrieve said data signal from the modulated optical beam, and wherein the system manager is operable to control the production system using the retrieved data signal.

2. A manufacturing system according to claim 1, further comprising an actuator associated with the first signalling device,
wherein the system manager is operable to generate a control signal for varying a parameter of the production system,
wherein the second signalling device comprises a modulator operable to modulate the light beam generated by the light source in accordance with the control signal,
wherein the first signalling device comprises a detector operable to recover the control signal from the incoming light beam from the second signalling device, and
wherein the actuator is operable to vary said parameter of the production system in accordance with said recovered control signal.

3. A manufacturing system comprising:
a production system operable to process starting materials to output a product;
a system manager having associated therewith a first signalling device, wherein the system manager is operable to generate a control signal for varying a parameter of the production system, and wherein the first signalling device comprises a retro-reflecting modulator operable to: i) receive an incoming light beam; ii) modulate the incoming light beam in accordance with the control signal; and iii) retro-reflect the incoming light beam, thereby transmitting a modulated light beam conveying said control signal; and
an actuator operable to vary a parameter of the production system, the actuator having associated therewith a second signalling device comprising: i) a light source operable to generate a light beam; ii) a transmitter operable to transmit the generated light beam to said first signalling device; iii) a receiver operable to receive the modulated light beam from said first signalling device; and iv) a processor operable to retrieve said control signal from the modulated optical beam, and wherein the actuator is operable to vary said parameter of the production system in accordance with the retrieved control signal.

4. A manufacturing system according to claim 3, further comprising a sensor operable to generate a data signal representative of a parameter of the production system, said sensor being associated with the first signalling device,
wherein the second signalling device comprises a modulator operable to modulate the light beam generated by the light source in accordance with the data signal,
wherein the first signalling device comprises a detector operable to recover the data signal from the incoming light beam from the second signalling device, and
wherein the system manager is operable to control the production apparatus using the system manager.

5. A manufacturing system according to claim 2 or 4, wherein the detector of the first signalling device comprises;
an optical-to-electric converter operable to convert at least part of the optical beam from the second signalling device into a corresponding electrical current signal having a high frequency component, carrying said data, and a low frequency component;
a separator operable to separate the low frequency component from the high frequency component;
a signal generator operable to generate an offset current signal using the separated low frequency component of the electrical current signal;
a subtractor operable to subtract the offset current signal from the electrical current signal to generator detection current signal;
an amplifier operable to amplify the detection current signal to generate an amplified signal; and
a processor operable to process the amplified signal to recover said data.

6. A manufacturing system according to claim 5, wherein the optical-to-electric convertor comprises a photodiode.

7. A manufacturing system according to claim 5 or 6, wherein the signal generator comprises a current mirror operable to generate a mirror current corresponding to the low frequency component of the electrical current signal.

8. A manufacturing system according to claim 7, wherein the mirror current is applied to a load, and wherein the detector further comprises a monitor operable to monitor the potential difference across the load to generate a voltage signal indicative of said low frequency component.

9. A manufacturing system according to claim 7 or 8, wherein the current mirror is a first current mirror, and wherein the subtractor comprises a second current mirror arranged so that the output branch of the first current mirror is connected to an input branch of the second current mirror and the optical-to-electric converter is connected to an output branch of the second current mirror, thereby causing the offset current to flow through the output branch of the second current mirror.

10. A manufacturing system according to claim 9, wherein the signal generator further comprises a splitter operable to split off a portion of the mirror current generated by the first current mirror to reduce the current flowing into the input branch of the second current mirror, wherein the portion of the mirror current is set so that current flows in one direction through the amplifier.

11. A manufacturing system according to any preceding claim, wherein the retro-reflecting modulator comprises a telecentric lens and a reflector.

12. A manufacturing system according to claim 11, wherein the reflector is positioned substantially within the back focal plane of the telecentric lens.

13. A manufacturing system according to any preceding claim, wherein the retro-reflecting modulator comprises a quantum confined Stark effect device.

14. A manufacturing system according to claims 13, wherein the quantum confined Stark effect device comprises:
a multi-layer semiconductor structure including a plurality of quantum wells having an optical absorption spectrum which varies in dependance upon an applied electric field, the multi-layer semiconductor structure having a face operable to transmit incident light; and
first and second electrodes operable to apply an electric field across the multi-layer semiconductor structure,
wherein one of the first and second electrodes is provided adjacent said face and comprises a plurality of strip conductors which extend over the face.

15. A manufacturing system according to claim 14, wherein the multi-layer semiconductor structure comprises an intrinsic semiconductor layer sandwiched between a p-conductivity semiconductor layer and a n-conductivity semiconductor layer, wherein the plurality of quantum wells are formed in the intrinsic semiconductor layer, and wherein said one electrode is provided adjacent the p-conductivity semiconductor layer.

16. A manufacturing system according to claim 14 or 15, wherein the multi-layer semiconductor structure comprises Gallium Arsenide.

17. A manufacturing system according to any of claims 14 to 16, wherein the multi-layer semiconductor structure comprises a projection extending from a substrate, the projection having a plane at a top surface, wherein said one electrode extends over the top surface of the projection and the other of the first and second electrodes is provided around the base of the projection.

18. A manufacturing system according to claim 17, wherein the projection has an octagonal cross-section.

19. A manufacturing system according to any of claims 14 to 18, wherein the plurality of strip conductors are parallel with each other.

20. A manufacturing system according to any preceding claim, wherein the first signalling device further comprises a modulator drive circuit for applying a drive signal to the retro-reflecting modulator, the modulator drive circuit comprising a plurality of push-pull drivers,
wherein the inputs of the plurality of push-pull drivers are connected together and the outputs of the plurality of push-pull drivers are connected, via respective resistors, to a common terminal, and wherein the output impedance of the modulator drive circuit is less than the output impedance of an individual push-pull driver.

21. A manufacturing system according to claim 20, wherein the plurality of push-pull drivers are CMOS drivers.

22. A manufacturing system according to any preceding claim, wherein the retro-reflecting modulator comprises an array of modulator elements.

23. A manufacturing system according to any preceding claim, wherein the light source of the second signalling device comprises an array of light emitters.

24. A manufacturing system according to claim 23, wherein the array of light emitters comprises at least one vertical cavity surface emitting laser.

25. A manufacturing system according to claim 23 or 24, wherein the second signalling device further comprises a telecentric lens.

26. A manufacturing system according to claim 25, wherein the array of light emitters is positioned substantially within a back focal plane of said telecentric lens.

27. A method of manufacturing a product using a production system operable to process starting materials to output the product, the method comprising:
sensing a parameter of the production system using a sensor and generating a data signal representative of the sensed parameter;
generating a light beam at a first signalling device associated with a system manager;
receiving the generated light beam at a second signalling device associated with the sensor;
modulating the received light beam in accordance with said data signal and retro-reflecting the received light beam back to the first signalling device;
detecting said reflected light beam at the first signalling device and recovering the data signal; and
controlling the production system using the recovered data signal.

28. A method of manufacturing a product using a production system operable to process starting materials to output the product, the method comprising:
generating a control signal, using a system manager, for changing a parameter of the production system;
generating a light beam at a first signalling device associated with an actuator;
receiving the generated light beam at a second signalling device associated with the system manager;
modulating the received light beam in accordance with said control signal and retro-reflecting the received light beam back to the first signalling device;
detecting said reflected light beam at the first signalling device and recovering the control signal; and
varying said parameter of the production system, using the actuator, in accordance with the recovered control signal.
